# EUROPEAN PATENT SPECIFICATION

(11) **EP 2 353 325 B1**
(45) Date of publication and mention of the grant of the patent: **06.04.2016**
(21) Application number: 09825028.5
(22) Date of filing: 04.11.2009
(51) Int. Cl.: H04W 40/02, H04L 29/04, H04W 84/18

(54) **METHOD TO INCREASE NETWORK CAPACITY FOR WIRELESS MESH NETWORK**
VERFAHREN ZUR ERHÖHUNG DER NETZWERKKAPAZITÄT FÜR EIN DRAHTLOSES MESH-NETZWERK
PROCÉDÉ POUR AUGMENTER UNE CAPACITÉ DE RÉSEAU POUR UN RÉSEAU SANS FIL MAILLÉ

(30) Priority: 04.11.2008 MY 0804395
(43) Date of publication of application: 10.08.2011
(73) Proprietor: Mimos Berhad, 57000 Kuala Lumpur (MY)
(72) Inventor: HAFIZAL, Mohamad, 57000 Kuala Lumpur (MY); AHMAD, Helmi, Abdul, Halim, 57000 Kuala Lumpur (MY); BORHANUDDIN, Mohd, Ali, 57000 Kuala Lumpur (MY); SAEED, Rashid Abdelhaleem, 57000 Kuala Lumpur (MY); MAZLAN, Abbas, 57000 Kuala Lumpur (MY)
(74) Representative: Ward, David Ian
(86) International application number: PCT/MY2009/000184
(87) International publication number: WO 2010/053347

(56) References cited:
- WO-A1-2007/021602
- WO-A2-2005/091571
- US-A1- 2006 282 405
- US-A1- 2008 123 584
- AKYILDIZ, I. F. ET AL.: 'A Survey on Wireless Mesh Networks.' IEEE COMMUNICATIONS MAGAZINE. vol. 43, no. 9, September 2005, pages 23 - 30, XP008147374
- '2007 Asia-Pacific Conference on Applied Electromagnetics. IEEE', 2007 article SAEED, R. A. ET AL.: 'Hybrid Automatic Repeat Request for WiMAX - Mobile Multi- Hop Relay using Co-Channel Cancellation.', pages 1 - 6, XP031309935

## Description

### Field of Invention

The present invention relates generally to a method for wireless communication system and more particularly to a method for increasing network capacity for wireless mesh network system.

### Background of the Invention

Wireless mesh network refers to a set of wireless devices or nodes that join together into a network and can communicate with other peer nodes. In mesh networks, wireless network nodes may form a "mesh" of potential paths for which a communication may travel to reach its destination. Wireless mesh network can be used for various deployment scenario such rural or community network, private or enterprise network, and public safety or video surveillance. The demand for high throughput is inevitable as the number of users in the network grows. Additionally, high data rate capability is required for bandwidth intensive applications involving rich multimedia content and large data transfer.

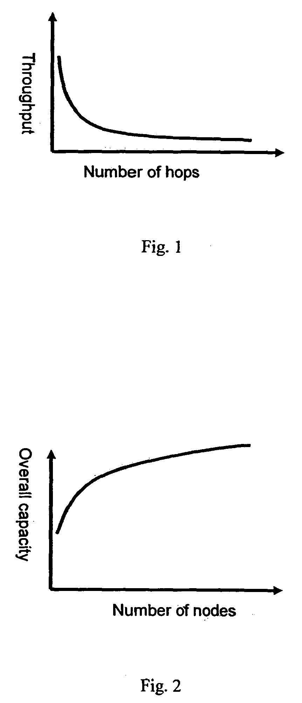

In wireless mesh network, throughput degrades as the number of hops between the source and destination increases. The result of this phenomenon is shown in Fig. 1. In a worst case scenario, throughput degrades by a factor of two through each successive hop. This will cause serious problem for the wireless mesh deployment that requires high data rate applications involving many users connected to the network, such as community network.

A number of methods have been proposed to circumvent this problem. One of the solutions is to employ multi-radio node that uses different radio-channel to communicate with neighboring nodes and with local clients. This solves the predicament of the early single-radio implementations that had to share one radio channel for client and backhaul traffic. There are ongoing efforts to increase the efficiency of transmission through wireless mesh networks.

WO2007021602 discloses an example of cooperative diversity protocol within a mesh network.

The present invention has overcome the drawbacks of the existing methods by providing a collaborative relay mechanism in relaying data from source to destination. The collaborative relay techniques involve at least one node to assist the data transmission in a multi-hop environment where as the number of node increases in the mesh network, more relay paths are created to enable diversity path and spatial multiplexing. Consequently, the overall network throughput is enhanced as the number of mesh nodes increase and the result is illustrated in Fig. 2.

An objective of the present invention is to provide a method where the overall system throughput is enhanced as the number of mesh nodes increase by providing multiple path connections between source and transmitter to enhance capacity of wireless mesh network.

Still another objective of the present invention is to provide a method where the relay mesh nodes will systematically transmit sequence of data through different multi-path or parallel links.

Yet another objective of the present invention is to provide a method where same data could be transmitted through different mesh node creating path diversity to increase the reliability of the transmitted data.

These and other advantages will become apparent to those skilled in this art upon reading the following detailed description in conjunction with the accompanying drawings.

### Summary of the Invention

In the present invention, a method for increasing network capacity for wireless mesh network, comprising the steps of initiating a data transmission request between a source node and a destination node, identifying a mesh node from a plurality of mesh nodes which is closest to the source node and a target node which is closest to the destination node, establishing multiple paths from the mesh node towards the target node, synchronizing sub-frame in the frame header for transferring packet data to the target node, fragmenting the packet data into sub-packets to assign and route the sub-packets into the multiple paths, and aggregating the sub-packets based on synchronization signals, arriving at the target node the multiple paths at different time delay intervals, into data to be sent to the destination node.

In accordance to the present invention, the plurality of mesh nodes may include a routing table to be used as routing protocol for the mesh nodes. The mesh nodes may update the routing table from a step of computing the link conditions after the step of establishing multiple paths.

In accordance to the present invention, the frame header may also include node identification (ID) to identify the distance nodes for the mesh node (121) to establish the multiple communication paths.

### Brief Description of the Drawings

Other objects, features, and advantages of the invention will be apparent from the following description when read with reference to the accompanying drawings. In the drawings, wherein like reference numerals denote corresponding parts throughout the several views:
Fig. 1 shows a graph of throughput versus number of hops between the source and destination;
Fig. 2 is a graph showing the overall network throughput enhanced by the present invention as the number of mesh nodes increase;
Fig. 3 depicts an exemplary network diagram of the data transmission from source node to destination node through multiple independent mesh node paths according to the present invention;
Fig. 4 illustrates a frame structure for mesh node or relay station with synchronization frame and receiving frames for the present invention;
Fig. 5 shows a schematic diagram of NWK/MAC/PHY layers for multi-hop communications between two mobile stations; and
Fig. 6 is a flowchart for the method for increasing network capacity for wireless mesh network system of the present invention.

### Detailed Description of the Preferred Embodiments

In the following detailed description, numerous specific details are set forth in order to provide a thorough understanding of the invention. However, it will be understood by those of ordinary skill in the art that the invention may be practiced without these specific details. In other instances, well-known methods, procedures and/or components have not been described in detail so as not to obscure the invention. Reference will now be made in detail to the preferred embodiments of the present invention, examples of which are illustrated in the accompanying drawings.

In wireless communication system, there exist fundamental limitations for the achievable date rate for the signal transmission due to hostile propagation channel between transmitter and receiver. Unlike wired transmission medium, the effects of fading and shadowing have to be considered for different propagation environment. The capacity of wireless system is also limited by interference from various sources. Additionally, the wireless link physical (PHY) layer itself constitutes capacity constraints, whereby link flow values could not be larger than the wireless link data rates.

The present invention is to increase the throughput in the network as the source-destination link becomes weak, which can be attributed two factors. First in the conventional single hop, single link communication, due to large separation distance between transmitter and receiver, a low received signal to noise ratio (SNR) translated into low throughput. Secondly, in a multi-hop, single link communication, the throughout reduces as the number of hop increase. Therefore in the present invention, several mesh nodes in the network are configured to assist in transmissions.

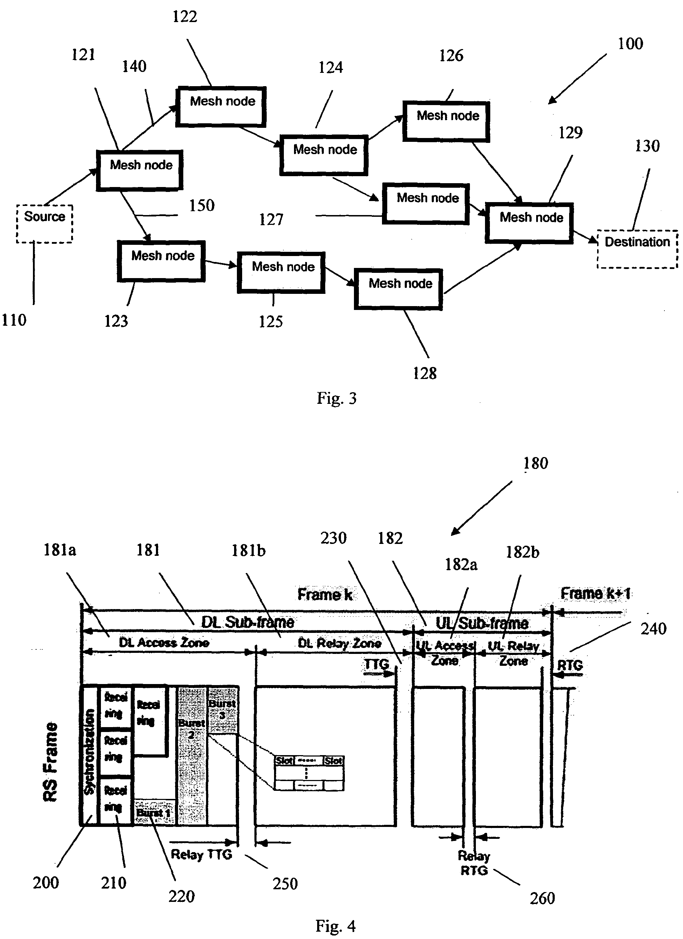

As shown in Fig. 3, a graphical illustration of the wireless mesh network (10) employing a cooperative rely technique for enhancing the overall network throughput and network capacity according to an embodiment of the invention is depicted. This graph is only used to simplify and clarify the description of the invention and it should be understood that the graph is not essential component of the invention.

The wireless mesh network (100) includes a source node (110), a plurality of mesh nodes (120), generally shown as (121, 122, 123, 124, 125, 126, 127, 128 and 129) and a destination node (130). Although Fig. 3 depicts nine mesh nodes (120), the wireless mesh network (100) may include additional or fewer mesh nodes. The plurality of mesh nodes (120) may include infrastructure based equipment such as base stations, routers, access points and relay stations. It is also possible for client equipment such as mobile station or subscriber station to act as mesh node (120), which will be depending on their cdnfiguration. The mesh nodes (120) cooperate with each other at the physical layer to forward packets from the source node (110) to the destination node (130) via wireless communication channels. The channels are represented as links or edges between the nodes.

With the cooperative relay technique, a single node can broadcast a packet to one or more nodes and a single node can receive packets from multiple cooperating nodes. The transmission between the source node (110) and destination node (130) will be routed through more than one path. In example as shown in Fig. 3, two transmission paths, namely a first transmission path (140) and a second transmission path (150) are created from a mesh node (121) to transmit a packet to a target node (129). The first transmission path (140) includes multiple hops from the mesh node (121 ) to target node (129).

The mesh node (124) identifies two or more of the plurality mesh nodes (120) to transmit a packet simultaneously to distant nodes. For example in present invention, the mesh nodes (126 and 127) may be distance nodes of the mesh node (124). The distance nodes (126 and 127) may be neighbor nodes relatively closer to the mesh node (124) than the target node (129). Thus, distance nodes (126) and/or (127) may cooperate with the mesh node (124) to communicate with the target node (129). For 'example, the mesh node (124) may forward a packet to the first distance node (126) via the link (160) and/or to the second distance node (127) via the link (170).

The frame structure (180) for a relay station of the present invention wireless mesh network (100) which uses multi-hop transmission paths communication between the mesh nodes are coordinated by using synchronization sub-frame in the frame header as shown in Fig. 4. Each frame is divided into a downlink part (DL) (181) and an uplink part (UL) (182). Time is shown along the horizontal axes and frequency is shown along the vertical axis. The downlink sub-frame part (DL) (181) begins with a downlink access zone (181a) and follows by a downlink relay zone (181b) and the uplink sub-frame part (UL) (182) also begins with an uplink access zone (182a) and follows by an uplink relay zone (182b).

The downlink access zone (181a) includes a synchronization frame (200), receiving frames (210) and bursts (220). The frame structure (180) includes several spaces to allow transceivers within the system sufficient time to switch between transmitting data and receiving data and vice versa. Transmit/Receive Transition Gap (TTG) (230) allows the relay station to switch between the transmitting data on the downlink and receiving data on the uplink and similarly the Receive/Transmit Transition Gap (RTG) (240) at the beginning of each frame allows the relay station to switch between receiving data on the uplink and transmitting data on the downlink.

A relay TTG (250) is provided to allow the relay station to switch between the access zone (181a) and relay zone (181b) on a downlink and a relay RTG (260) is provided to allow the relay station to switch between the access zone (182a) and relay zone (182b) on an uplink. The network links between the source node (110) and destination node (130) are made aware of the network path and condition through identification (ID) which is keep in the frame header. This enables efficient routing mechanism for the data to travel to the intended destination.

An advanced routing protocol could be employed to further enhance the performance of the overall network. The routing protocol may identify a path across the wireless mesh network (100) over which a packet may be forwarded from node to node. The routing protocol may be based on tables such that each of the plurality of mesh nodes (120) may include a routing table. The routing table may include routing information such as destination node information, next hop information, link condition and/or other suitable routing information. The link condition may include link quality, usage, hop-count, etc. There exist multiple routes and path connections between the source node (110) and destination node (130).

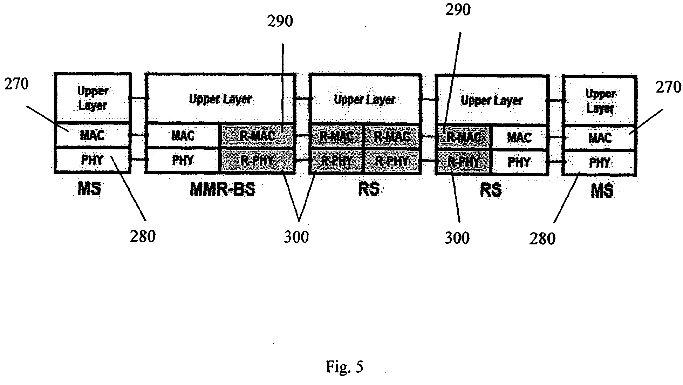

The multi-hop arrangement between mobile stations (MS) source and destination is depicted in Fig. 5, showing different media access address (MAC) (270) / physical (PHY) (280) interface between mobile station (MS) and relay station (RS). The R-MAC (290) provides the concatenation and fragmentation of forwarded MAC protocol data unit (PDU) and control functions, such as scheduling, routing, flow control and etc. The R-MAC (290) supports the use of generic MAC header. The R-PHY (300) layer provides definition of PHY design, such as sub-channelization, protocol stack, modulation, code set and etc, for links between MMR-BS and RS and between RSs. The cooperative relay between the mesh nodes or relay stations is executed at network (NWK) and MAC layers

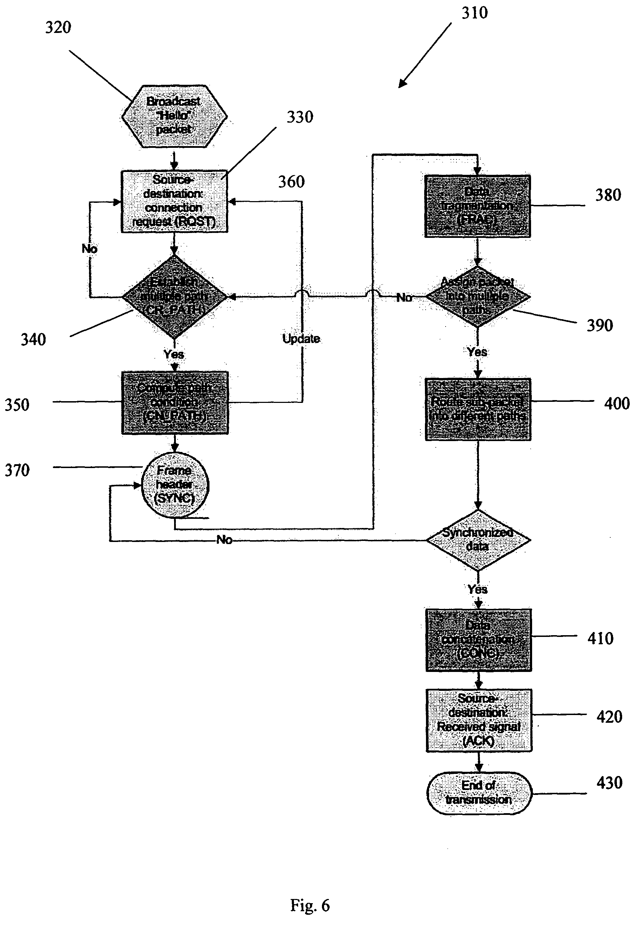

Fig. 6 shows a flowchart of a method of the collaborative relay technique used in the wireless mesh network (100) according to the present embodiment of the invention. The process (310) may begin with mesh nodes (120) broadcast "Hello" packet to their neighbors (step 320). This will then invoke a source node (110) to transmit a connection request (step 330) to a destination node (130). A mesh node (121) identifies all possible paths between the source node (110) and destination node (130). The mesh node (121) then establishes multiple paths (step 340) and computes the path conditions (step 350). Accordingly, the mesh node (121) for example via the network (NWK) layer, may update the routing table (step 360) and aware of their neighbors status and link conditions.

The multiple paths between the source node (110) and destination node (130) are established by synchronization sub-frame in the frame header (step 370). The mesh node (121) which is closest to the source node (110), will then perform data fragmentation (step 380) by dividing data into small packet. The mesh node (121) then assigns (step 390) and transmits (step 400) the sub-packet into different multiple paths. A target node (129) which is closest to the destination node (130) will then perform the data concatenation (step 410). The sub-packets from the mesh node (121) are accumulated and encapsulated based on synchronization signals arriving from different paths at different time delay intervals. The target node (129) then transfer the data to the destination node (130) (step 420) and the data transmission is then ended (step 430).

The collaborative relay technique are categorized into two methods where the first method is decode and forward and the second method is amplify and forward, in which the frame structure and MAC messaging will be different. In the first method of decode and forward, the relay nodes fully decode source message, re-encodes and re-transmits. While in second method of amplify and forward, the relay nodes do not decode, but only scale and re-transmit signal received from source to destination.

As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein.

## Claims

1. A method (310) for increasing network capacity for wireless mesh network (100), comprising the steps of:
initiating (330) a data transmission request between a source node (110) and a destination node (130);
identifying a mesh node (121) from a plurality of mesh nodes (120) which is closest to said source node (110) and a target node (129) which is closest to said destination node (130);
establishing (340) multiple paths from said source node (110) towards said destination node (130) by utilizing synchronization (370) sub-frames included in a frame header for transferring packet data to said target node (129);
fragmenting (380), at said mesh node (121), said packet data into sub-packets to assign (390) and route (400) said sub-packets into said multiple paths; and
aggregating (410) said sub-packets based on synchronization signals, arriving at said target node (129) from said multiple paths at different time delay intervals, into data to be sent to said destination node (130).

2. The method for increasing network capacity for wireless mesh network (100) as claimed in claim 1, wherein each of said plurality of mesh nodes (120) may include a routing table to be used as routing protocol for the mesh nodes (120) aware of their neighbors status and link conditions.

3. The method for increasing network capacity for wireless mesh network (100) as claimed in claim 2, wherein said mesh nodes (120) may update said routing table from a step of computing (350) said link conditions after said step of establishing (340) multiple paths.

4. The method for increasing network capacity for wireless mesh network (100) as claimed in claim 1, wherein said fragmenting (380) said packet data into sub-packets to assign (390) and route (400) said sub-packets into said multiple paths is via media access address (MAC) layer of said mesh node (121).

5. The method for increasing network capacity for wireless mesh network (100) as claimed in claim 1, wherein said frame header may also include node identification (ID) to identify the distance nodes for said mesh node (121) to establish the multiple communication paths.

6. The method for increasing network capacity for wireless mesh network (100) as claimed in claim 1, wherein said aggregating (410) said sub-packets is via media access address (MAC) layer of said target node (129).

7. The method for increasing network capacity for wireless mesh network (100) as claimed in claim 1, wherein said mesh nodes (120) may perform decode and forward function where said mesh nodes (120) fully decode source message, re-encodes and re-transmits.

8. The method for increasing network capacity for wireless mesh network (100) as claimed in claim 1, wherein said mesh nodes (120) may perform amplify and forward function where said mesh nodes (120) do not decode but only scale and retransmit signal received from source node (110) to destination node (130).

## Patentansprüche

1. Verfahren (310) zum Vergrößern der Netzwerkkapazität für ein drahtloses Mesh-Netzwerk (100), die folgenden Schritte umfassend:
Einleiten (330) einer Datenübertragungsanforderung zwischen einem Ausgangsknoten (110) und einem Bestimmungsknoten (130);
Identifizieren eines Mesh-Knotens (121) aus einer Vielzahl von Mesh-Knoten (120), der dem Ausgangsknoten (110) am nächsten ist, und eines Zielknotens (129), der dem Bestimmungsknoten (130) am nächsten ist;
Einrichten (340) mehrerer Wege von dem Ausgangsknoten (110) hin zu dem Bestimmungsknoten (130) durch Nutzung von Synchronisation (370) von Teilrahmen, die in einem Rahmenkopf enthalten sind, zum Übertragen von Paketdaten an den Zielknoten (129);
Fragmentieren (380), an dem Mesh-Knoten (121), der Paketdaten zu Teilpaketen zum Zuweisen (390) und Leiten (400) der Teilpakete in die mehreren Wege; und
Vereinigen (410) der Teilpakete basierend auf Synchronisationssignalen, eintreffend an dem Zielknoten (129) aus den mehreren Wegen zu verschiedenen Zeitverzögerungsintervallen, zu Daten, die an den Bestimmungsknoten (130) zu senden sind.

2. Verfahren zum Vergrößern der Netzwerkkapazität für ein drahtloses Mesh-Netzwerk (100) nach Anspruch 1, wobei jeder der Vielzahl von Mesh-Knoten (120) eine Leitwegtabelle enthalten kann, die als Leitwegprotokoll für die Mesh-Knoten (120), die den Status und Verknüpfungsbedingungen ihrer Nachbarn kennen, zu verwenden ist.

3. Verfahren zum Vergrößern der Netzwerkkapazität für ein drahtloses Mesh-Netzwerk (100) nach Anspruch 2, wobei die Mesh-Knoten (120) die Leitwegtabelle von einem Schritt des Berechnens (350) der Verknüpfungsbedingungen nach dem Schritt des Einrichtens (340) mehrerer Wege aktualisieren können.

4. Verfahren zum Vergrößern der Netzwerkkapazität für ein drahtloses Mesh-Netzwerk (100) nach Anspruch 1, wobei das Fragmentieren (380) der Paketdaten zu Teilpaketen zum Zuweisen (390) und Leiten (400) der Teilpakete in mehrere Wege über die Endgeräte-Anschlussadressen- bzw. MAC-Schicht des Mesh-Knotens (121) erfolgt.

5. Verfahren zum Vergrößern der Netzwerkkapazität für ein drahtloses Mesh-Netzwerk (100) nach Anspruch 1, wobei der Rahmenkopf außerdem Knotenidentifikation (ID) zum Identifizieren der Distanzknoten für den Mesh-Knoten (121) zum Einrichten der mehreren Kommunikationswege enthalten kann.

6. Verfahren zum Vergrößern der Netzwerkkapazität für ein drahtloses Mesh-Netzwerk (100) nach Anspruch 1, wobei das Vereinigen (410) der Teilpakete über die Endgeräte-Anschlussadressen- bzw. MAC-Schicht des Zielknotens (129) erfolgt.

7. Verfahren zum Vergrößern der Netzwerkkapazität für ein drahtloses Mesh-Netzwerk (100) nach Anspruch 1, wobei die Mesh-Knoten (120) Decodierungs- und Weiterleitungsfunktionen durchführen können, wobei die Mesh-Knoten (120) Ausgangsnachrichten vollständig decodieren, erneut codieren und erneut übertragen.

8. Verfahren zum Vergrößern der Netzwerkkapazität für ein drahtloses Mesh-Netzwerk (100) nach Anspruch 1, wobei die Mesh-Knoten (120) Verstärkungs- und Weiterleitungsfunktionen durchführen können, wobei die Mesh-Knoten (120) vom Ausgangsknoten (110) empfangene Signale nicht decodieren, sondern nur skalieren und zum Bestimmungsknoten (130) neu übertragen.

## Revendications

1. Procédé (310) d'augmentation d'une capacité de réseau pour un réseau sans fil maillé (100), comprenant les étapes ci-dessous consistant à :
initier (330) une demande de transmission de données entre un noeud de source (110) et un noeud de destination (130) ;
identifier un noeud maillé (121), parmi une pluralité de noeuds maillés (120), qui est le plus proche dudit noeud de source (110), et un noeud cible (129) qui est le plus proche dudit noeud de destination (130) ;
établir (340) de multiples chemins, dudit noeud de source (110) vers ledit noeud de destination (130), en utilisant des sous-trames de synchronisation (370) incluses dans un en-tête de trame en vue de transférer des données en paquets vers ledit noeud cible (129) ;
fragmenter (380), au niveau dudit noeud maillé (121), lesdites données en paquets, en des sous-paquets, en vue d'affecter (390) et d'acheminer (400) lesdits sous-paquets dans lesdits multiples chemins ; et
agréger (410) lesdits sous-paquets sur la base de signaux de synchronisation, arrivant au niveau dudit noeud cible (129), en provenance desdits multiples chemins, à différents intervalles de temps de propagation, en des données à envoyer audit noeud de destination (130).

2. Procédé d'augmentation d'une capacité de réseau pour un réseau sans fil maillé (100) selon la revendication 1, dans lequel chaque noeud de ladite pluralité de noeuds maillés (120) peut inclure une table de routage devant être utilisée en tant que protocole de routage pour les noeuds maillés (120) ayant connaissance de l'état de leurs voisins et de leurs états de liaisons.

3. Procédé d'augmentation d'une capacité de réseau pour un réseau sans fil maillé (100) selon la revendication 2, dans lequel lesdits noeuds maillés (120) peuvent mettre à jour ladite table de routage à partir d'une étape consistant à calculer (350) lesdits états de liaisons suite à ladite étape d'établissement (340) de multiples chemins.

4. Procédé d'augmentation d'une capacité de réseau pour un réseau sans fil maillé (100) selon la revendication 1, dans lequel ladite étape de fragmentation (380) desdites données en paquets en des sous-paquets en vue d'affecter (390) et d'acheminer (400) lesdits sous-paquets dans lesdits multiples chemins est mise en oeuvre par l'intermédiaire d'une couche de contrôle d'accès au support (MAC) dudit noeud maillé (121).

5. Procédé d'augmentation d'une capacité de réseau pour un réseau sans fil maillé (100) selon la revendication 1, dans lequel ledit en-tête de trame peut également inclure une identification de noeud (ID) en vue d'identifier les noeuds à distance afin de permettre audit noeud maillé (121) d'établir les multiples chemins de communication.

6. Procédé d'augmentation d'une capacité de réseau pour un réseau sans fil maillé (100) selon la revendication 1, dans lequel ladite étape d'agrégation (410) desdits sous-paquets est mise en oeuvre par l'intermédiaire d'une couche de contrôle d'accès au support (MAC) dudit noeud cible (129).

7. Procédé d'augmentation d'une capacité de réseau pour un réseau sans fil maillé (100) selon la revendication 1, dans lequel lesdits noeuds maillés (120) peuvent mettre en oeuvre une fonction de transfert et décodage où lesdits noeuds maillés (120) décodent entièrement un message source, et des recodages et retransmissions.

8. Procédé d'augmentation d'une capacité de réseau pour un réseau sans fil maillé (100) selon la revendication 1, dans lequel lesdits noeuds maillés (120) peuvent mettre en oeuvre une fonction de transfert et amplification où lesdits noeuds maillés (120) ne décodent pas de signal, mais dimensionnent et retransmettent uniquement un signal reçu, du noeud de source (110) au noeud de destination (130).
